Europäisches Patentamt

European Patent Office

Office européen des brevets

(19)

(11) **EP 0 543 188 B1**

(12) **EUROPÄISCHE PATENTSCHRIFT**

(45) Veröffentlichungstag und Bekanntmachung des Hinweises auf die Patenterteilung:
**13.03.1996 Patentblatt 1996/11**

(51) Int Cl.⁶: **C09D 5/44**

(21) Anmeldenummer: **92118468.5**

(22) Anmeldetag: **29.10.1992**

(54) **Kunstharze für Pigmentzubereitungen**

Resins for pigment pastes

Résines pour préparations du pigment

(84) Benannte Vertragsstaaten:
**AT BE CH DE DK ES FR GB IT LI NL PT SE**

(30) Priorität: **15.11.1991 DE 4137639**

(43) Veröffentlichungstag der Anmeldung:
**26.05.1993 Patentblatt 1993/21**

(73) Patentinhaber: **BASF Lacke + Farben AG**
**D-48165 Münster-Hiltrup (DE)**

(72) Erfinder:
• **Huemke, Klaus, Dr.**
**D-6701 Friedelsheim (DE)**
• **Hoffmann, Gerhard, Dr.**
**D-6701 Otterstadt (DE)**

(74) Vertreter: **Langfinger, Klaus-Dieter, Dr.**
**BASF Aktiengesellschaft,**
**Patentabteilung ZDX - C 6**
**D-67056 Ludwigshafen (DE)**

(56) Entgegenhaltungen:
**EP-A- 0 193 102       EP-A- 0 326 937**
**WO-A-86/07372         US-A- 4 225 479**
**US-A- 4 533 682**

**Beschreibung**

Die vorliegende Erfindung betrifft Kunstharze, auf der Basis von Produkten, die durch Umsetzen von

A) 30 bis 80 Gew.-% epoxidgruppen-tragenden Harzen auf der Basis

$a_1$) mehrwertiger Phenole und
$a_2$) mindestens einer Verbindung aus der Gruppe der

$\alpha_1$) Polyoxyalkylenpolyole,
$\alpha_2$) Polyoxyalkylenpolyepoxide,
$\alpha_3$) Polyoxyalkylenpolyamine,
$\alpha_4$) mehrwertigen aliphatischen Alkohole und gewünschtenfalls

$a_3$) gegenüber Epoxiden monofunktionell reagierenden phenolischen Verbindungen und

B) 10 bis 30 Gew.-% Monocarbonsäuren mit 5 bis 30 Kohlenstoffatomen und

C) 5 bis 20 Gew.-% Aminen, welche mindestens eine primäre und eine tertiäre Aminogruppe enthalten und

D) 1 bis 10 Gew.-% formaldehyd-liefernden Verbindungen wobei sich die Komponenten (A) bis (E) zu 100 Gew.-% ergänzen erhältlich sind.

E) 0 bis 5 Gew.-% an Zusatzstoffen.

Weiterhin betrifft die Erfindung wäßrige Dispersi nen dieser Kunstharze, sowie Pigmentzubereitungen, die die wäßrigen Kunstharzdispersionen enthalten. Ferner betrifft die Erfindung die Verwendung der Pigmentzubereitungen in Elektrotauchlackierbädern.

Kunstharze, die mit möglichst geringen Mengen an organischen Lösungsmitteln hergestellt werden können und deren niedrige Viskosität es erlaubt, sie ohne Lösungsmittelzugabe zu verarbeiten, sind aus Gründen des Umweltschutzes besonders wünschenswert. Um beispielsweise Überzugsmittel, die durch elektrische Tauchlackierung abgeschieden werden können, zu pigmentieren, ist es häufig erforderlich, zunächst die Pigmente mit einem Kunstharz, das oberflächenaktive Eigenschaften aufweist, einem sogenanntem Reibharz, fein zu vermahlen und sie dann in Form dieser Pigmentzubereitung mit den übrigen Bestandteilen des überzugsmittels zu mischen. Dabei sollten die Reibharze die Pigmente möglichst gut benetzen, so daß diese auch in hohen Konzentrationen weder agglomerieren noch sich auch nach längerer Lagerzeit absetzen. Außerdem sollten die Reibharze mit den anderen Bestandteilen des Überzugsmittels gut verträglich sein, damit die Eigenschaften des Überzugsmittels nicht nachteilig beeinflußt werden. Darüber hinaus sollten sie eine relativ niedrige Viskosität besitzen, um einen hohen Lösungsmittelgehalt vermeiden zu können.

Lösungsmittelarme Reibharze sind beispielsweise aus der EP-A 352 677 bekannt, jedoch ist der Lösungsmittelgehalt der daraus hergestellten Pigmentpasten noch unbefriedigend.

Aufgabe war es daher, Kunstharze zur Verfügung zu stellen, die sich aufgrund ihrer Eigenschaften besonders gut zur Herstellung lösungsmittelarmer Pigmentpasten eignen.

Dementsprechend wurden die eingangs definierten Kunstharze gefunden.

Komponente A

Als Komponente A kommen epoxidgruppen-tragende Harze in Betracht, die im allgemeinen in Mengen von etwa 30 bis 80 Gew.-%, besonders von etwa 50 bis 70 Gew.-% in den Kunstharzen enthalten sein können. Ihre mittleren Molekulargewichte $\overline{M}_w$ können in der Regel von ca. 200 bis 2000, vorzugsweise von ca. 600 bis 1500 liegen. Im allgemeinen haben die epoxidgruppentragenden Harze Epoxidequivalentgewichte von 100 bis 1000, speziell von 300 bis 750.

Bei den epoxidgruppen-tragenden Harzen handelt es sich um Epoxidverbindungen auf der Basis mehrwertiger Phenole, wobei diese phenolischen Epoxidgrundbausteine mit mehrwertigen Polyxoxyalkylenderivaten wie Polyoxyalkylenpolyepoxiden, -aminen und -hydroxiden gemischt bzw. umgesetzt werden können. Daneben können sie auch mit mehrwertigen aliphatischen Alkoholen umgesetzt werden. Zum Einstellen der gewünschten Epoxidequivalentgewichte können diese Mischungen bzw. Umsetzungsprodukte mit weiteren Mengen an mehrwertigem Phenol abreagiert werden. Ferner ist es möglich bei der Herstellung der epoxidgruppen-tragenden Harze eine gegenüber Epoxiden monofunktionell reagierende phenolische Verbindung mitzuverwenden.

Die phenolischen epoxidgruppen-tragenden Grundbausteine weisen im allgemeinen Epoxidequivalentgewichte von 150 bis 500, vorzugsweise 150 bis 200 auf. Sie lassen sich beispielsweise dadurch erhalten, daß man mehrwertige Phenole mit Epihalogenhydrin, vorzugsweise Epichlorhydrin umsetzt. Als mehrwertige Phenole sind beispielsweise zu nennen: Resorcin, Hydrochinon, 2,2-Bis-(4-hydroxyphenyl)propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, Bis-(4-hydroxyphenyl)-1,1-ethan, Bis-(4-hydroxyphenyl)-1,1'-isobutan, Bis-(4-hydroxy-t-butylphenyl)-2,2-propan, Bis-(2-hydroxynaphthyl)methan, 1,5-Dihydroxynaphthalin, Tris-(4-hydroxyphenyl)methan, Bis-(4-hydroxyphenyl)-1,1'-ether. Bisphenol A ist hierbei das bevorzugte mehrwertige Phenol.

Die in Betracht kommenden Polyoxyalkylenderivate sind Polyoxyalkylenpolyole, Polyoxyalkylenpolyepoxide oder Polyoxyalkylenpolyamine oder Mischungen dieser Verbindungen. Diese Polyoxyalkylenderivate können linear oder verzweigt sein. Außerdem sind auch Polyoxyalkylenderivate geeignet, die verschiedene Oxoalkylengruppen haben. Bevorzugt werden Polyoxyalkylenderivate, die im Mittel zwei endständige Hydroxy-, Epoxy- oder Aminogruppen pro Molekül tragen. Beispiele geeigneter Polyoxyalkylenpolyole sind Polyoxyethylenglykol, Polyoxypropylenglykol, Polyoxybutylenglykol, Polyoxyhexamethylenglykol, Polyoxymonomethylenglykol, Polyoxydecamethylenglykol, Polyoxyethylen-propylenglykol. Die mehrwertigen Polyoxyalkylenpolyepoxide können z.B. durch Umsetzen der vorgenannten Polyoxyalkylenpolyole mit Epihalogenhydrin erhalten werden. Polyoxyalkylenpolyamine lassen sich beispielsweise durch Michael-Addition von Acrylnitril an Polyoxyalkylenpolyole mit anschließender Hydrierung der Nitrilgruppe herstellen, oder durch direkte Umsetzung der Polyoxyalkylenpolyole mit Ammoniak. Die für die Herstellung der erfindungsgemäßen Kunstharze bevorzugt eingesetzten mehrwertigen Polyoxyalkylenderivate sind Polyoxybutylenglykol, Polyoxybutylenamin sowie Polyoxybutylenepoxid.

Die mittleren Molekulargewichte dieser Polyoxyalkylenderivate liegen in der Regel zwischen 400 und 4000, vorzugsweise von 800 bis 1000, wobei die jeweiligen Equivalentgewichte im allgemeinen zwischen 200 und 2000, vorzugsweise von 400 bis 500 betragen.

Zu den mehrwertigen aliphatischen Alkoholen zählen Ethylenglykol, 1,3-Propandiol, Butandiol, 1,5-Pentandiol, Hexandiol, 1,2,6-Hexantriol, wobei Butandiol und Hexandiol bevorzugt sind.

Zum Einstellen des Epoxidequivalentgewichtes eignen sich prinzipiell alle vorgenannten mehrwertigen Phenole, jedoch werden Hydrochinon, Resorcin, 1,5-Dihydroxynaphthalin, insbesondere Bisphenol A bevorzugt eingesetzt.

Die gegenüber Epoxiden monofunktionell reagierende phenolische Verbindung (a$_3$) kann Phenol selbst oder, wie es von Vorteil ist, ein Phenol sein, das mindestens einen Kernsubstituenten aus der Gruppe C$_1$-C$_{20}$-Alkyl-, C$_1$-C$_{20}$-Alkoxy- und C$_2$-C$_{20}$-Polyetherrest trägt. Die Reste können linear oder verzweigt sein, wobei lineare Reste bevorzugt werden. Die Reste können in ortho, metha oder para-Stellung zur Hydroxygruppe des Phenols stehen. So eignen sich beispielsweise Methylphenol, Ethylphenol, Pentylphenol, Hexylphenol, Dipentylphenol, Dihexylphenol, Heptylphenol, Octylphenol, Nonylphenol, Decylphenol, Dodecylphenol, Eicosylphenol, Pentoxyphenol, Hexoxyphenol, Dodecyloxyphenol, Eicosoxyphenol, Methoxymethylphenol, 5-Methoxypentylphenol oder Ethyletherdiethylenglykoxyphenol. Als besonders günstig haben sich monoalkylsubstituierte Phenole erwiesen, deren Alkylreste 8 bis 18 Kohlenstoffatome haben und para zur Hydroxygruppe stehen. Gemische aus mindestens zwei verschiedenen Alkylphenolen werden ganz besonders bevorzugt.

Komponente B

Die erfindungsgemäßen Kunstharze enthalten eine oder eine Mischung verschiedener Monocarbonsäuren, die 5 bis 30 Kohlenstoffatome enthalten und im allgemeinen in Mengen von 5 bis 30, vorzugsweise von 10 bis 20 Gew.-% vorhanden sind. Dabei können die Monocarbonsäuren linear oder verzweigt, gesättigt oder ungesättigt sein. Geeignete Monocarbonsäuren sind z.B. Hexansäure, 2-Ethylhexansäure, Nonansäure, Capryl-, Caprin-, Stearin-, Linol- sowie Linolensäure. Vorteilhaft sind gesättigte oder ungesättigte Fettsäuren mit 10 bis 20 Kohlenstoffatomen, worunter solche mit 15 bis 20 Kohlenstoffatomen ganz besonders bevorzugt werden. Als Beispiele seien genannt Pentadecansäure, 9-Hexadecensäure, Palmitinsäure, Stearinsäure, 6-Octadecensäure, 9-Octadecensäure (ölsäure), 9,10-Octadiensäure, Linolensäure, 9-Eicosensäure, Arachidonsäure.

Komponente C

Erfindungsgemäß enthalten die Kunstharze ein Amin, welches mindestens eine primäre und eine tertiäre Aminogruppe enthält. Hierbei kommen insbesondere aliphatische Diamine mit 3 bis 20 Kohlenstoffatomen in Betracht. Die Amine können linear, verzweigt oder cyclisch sein, wobei lineare Diamine bevorzugt werden. Als Beispiele sind zu nennen N,N-Dimethylaminopropylamin, N,N-Diethylaminopropylamin, N,N-Dimethylaminoneopentanamin, N,N-Diethyl-1,4-pentandiamin, 4-Amino-1-methylpiperidin. Als besonders vorteilhaft hat sich die Verwendung von N,N-Dimethylaminopropylamin erwiesen. Die Kunstharze können im allgemeinen von 1 bis 20 Gew.-% dieser Amine enthalten. Vorzugsweise betragen die Aminkomponenten von 1 bis 10 Gew.-% der Kunstharze.

Komponente D

Unter einer formaldehyd-liefernden Verbindung, die erfindungsgemäß als Komponente D mitverwendet wird, ist beispielsweise Paraformaldehyd aber auch Formaldehyd zu verstehen. Erfindungsgemäß enthalten die Kunstharze in der Regel von 1 bis 10, speziell von 1 bis 5 Gew.-% der Komponente D.

Komponente E

Zu den Zusatzstoffen, die im allgemeinen in Mengen bis zu 5 Gew.-% in den erfindungsgemäßen Kunstharze enthalten sein können, zählen gegenüber Säure-, Amino- und Epoxidgruppen inerte Lösungsmittel oder Lösungsmittelgemische wie Glykolether, darunter Propylenglykolphenylether und Propylenglykolmonomethylether. Zu den Zusatzstoffen zählen aber auch geringe Mengen an Polyurethanen und Polyvinylether, die als Verlaufshilfsmittel dienen.

Gewöhnlicherweise werden zur Herstellung der Kunstharze zunächst die epoxidgruppen-tragenden Harze mit den Monocarbonsäuren und den Aminen, gewünschtenfalls in Gegenwart geringer Mengen eines gegenüber den funktionellen Gruppen inerten Lösungsmittels oder Lösungsmittelgemisches und eines Katalysators, zur Reaktions gebracht, wobei die Epoxidgruppen abreagieren. Als Katalysatoren dienen Verbindungen wie Ethyltriphenylphosphoniumbromid, Triphenylphosphin, Dimethylbenzylamin und Triethylamin. Im allgemeinen werden diese in Mengen bis zu 3 Gew.-%, vorzugsweise bis zu 1 Gew.-%, bezogen auf das Gesamtgewicht der Komponente A, zugegeben. Anschließend werden die Umsetzungsprodukte weiter umgesetzt, indem man formaldehyd-liefernde Verbindungen zugibt. In der Regel liegen die Reaktionstemperaturen hierfür bei 70 bis 100°C. Die Temperaturen können aber auch darüber und darunter liegen, von etwa 50 bis ca. 150°C. Der bevorzugte Temperaturbereich ist von 80 bis 90°C. Die Reaktionszeiten können zwischen 2 und 10 Stunden betragen, wobei der Endpunkt der Reaktion beim vollständigen Formaldehydumsatz erreicht ist.

Die erfindungsgemäßen Kunstharze lassen sich, nachdem sie durch Zugabe von Säuren, wie Ameisensäure, Essigsäure oder Milchsäure oder auch anorganischen Säuren wie Phosphorsäure protoniert wurden, in Wasser dispergieren. Üblicherweise enthalten die wäßrigen Dispersionen von 10 bis 50 Gew.-% an Kunstharz.

Die erfindungsgemäßen Kunstharze, vorzugsweise in Form ihrer wäßrigen Dispersionen, eignen sich insbesondere als Reibharze in Pigmentzubereitungen. Das Mengenverhältnis von Kunstharz zu Pigmentpulver hängt im wesentlichen von der Art des Pigmentes oder der Pigmentmischung sowie deren Korngröße ab. Kunstharz : Pigmentpulvermengenverhältnisse von 0,05:1 bis 0,8:1, vorzugsweise von 0,1:1 bis 0,2:1 sind möglich. Neben einer wäßrigen Dispersion des Kunstharzes, welche im allgemeinen von 10 bis 70 Gew.-% der Pigmentzubereitungen beträgt, und dem Pigmentpulver, das in der Regel von 30 bis 80 Gew.-% in den Zubereitungen enthalten ist, können in den Pigmentzubereitungen auch noch bis zu 10 Gew.-% an Hilfsstoffen mitverwendet werden. Als Hilfsstoffe sind beispielsweise zu nennen Füllstoffe, Dispergiermittel, Weichmacher und Entschäumer sowie Pigmentstabilisatoren auf Acrylatbasis.

Gebräuchliche Pigmente sind beispielsweise Eisen- und Bleioxide, Strontiumcarbonat, Ruß, Titandioxid, Talkum, Bariumsulfat, Cadmiumgelb, Cadmiumrot, Chromgelb, Phthalocyaninblau oder metallische Pigmente wie Aluminiumflocken.

Üblicherweise wird die Pigmentzubereitung hergestellt, indem man die gewünschte Menge trockenen Pigmentpulvers, das ein Pigment oder eine Mischung verschiedener Pigmente enthält, mit der wäßrigen Dispersion des Kunstharzes mischt und anschließend die Mischung solange vermahlt bis die Feststoffpartikel die gewünschte Teilchengröße haben.

Das Zerkleinern der Feststoffpartikel geschieht in der Regel in Kugelmühlen, Sandmühlen, Cowles-Auflösern oder kontinuierlichen Zerreibungseinrichtungen. Nach der Zerkleinerung sollte die Teilchengröße der Feststoffpartikel im Bereich von 10 μm oder kleiner liegen. Feinheiten von 3 μm oder kleiner können durch Vermahlen in Gegenwart von Glas-, Korund-, Keramik- oder Zirkondioxid-Perlen erreicht werden.

Die so erhaltenen Pigmentzubereitungen können Lackbindemitteln beigemischt werden. Dabei kommen besonders solche Bindemittel in Betracht, die mit den Kunstharzen der Pigmentpasten verträglilch sind. Zu diesen zählen vor allem wasserdispergierbare Bindemittel auf Epoxidharzbasis, die in Elektrotauchlackierbädern eingesetzt werden können. Üblicherweise liegen die Mengenverhältnise von Pigmentzubereitung zu Bindemittel von 0,1 zu 1 bis 0,8 zu 1, vorzugsweise von 0,2 zu 1 bis 0,5 zu 1. Die Mischungen aus Pigmentzubereitung und Bindemittel können als weitere Bestandteile Vernetzer und Hilfsstoffe enthalten. Die Elektrotauchlackierung erfolgt im allgemeinen nach bekannten Verfahren, wobei alle elektrisch leitende Substrate, z.B. Metall wie Stahl, Kupfer oder Aluminium beschichtet werden können. Nach der Beschichtung können die überzüge bei erhöhter Temperatur, die im allgemeinen von dem Vernetzer abhängig ist, gehärtet werden.

Die erfindungsgemäßen Pigmentzubereitungen zeichnen sich durch ihre geringen Lösungsmittelgehalte sowie ihre Stabilität aus. Überzüge, die diese Pigmentzubereitungen enthalten, weisen einen hervorragenden Korrosionsschutz, insbesondere an Kanten, selbst dann auf, wenn die Pigmentzubereitungen keine Bleisalze enthalten.

Beispiele

Abkürzungen

EEW:       Epoxidequivalentgewicht
BPA:       Bisphenol A [2,2-Bis-(4-hydroxyphenyl)propan]
DEAPA:  Diethylaminopropylamin
PFA:       Paraformaldehyd
DDPh:     Dodecylphenol
NPh:       Nonylphenol
TPP:       Triphenylphosphin
VE:         voll entsalzt

I) Herstellung der erfindungsgemäßen Kunstharze

Allgemeine Arbeitsvorschrift

Die Bestandteile des epoxidgruppen-tragenden Harzes (Komponente A) wurden auf etwa 130°C erhitzt und mit der angegebenen Menge an Katalysator versetzt. Anschließend wurde solange bei dieser Temperatur gehalten, wobei bei stark exothermem Reaktionsverlauf gekühlt werden mußte, bis das gewünschte Epoxidequivalentgewicht (EEW) erreicht war. Durch den Zulauf von Lösungsmittel wurde die Viskosität auf den gewünschten Bereich eingestellt. Binnen einer Stunde ließ man zunächst die Monocarbonsäure (Komponente (B)), anschließend das Amin (Komponente (C)) zulaufen, wobei, wenn nötig unter Kühlen, die Reaktionstemperatur auf 80°C gehalten wurde. Nachdem der Epoxidwert auf 0 abgesunken war, wurde die angegebene Menge Paraformaldehyd zugesetzt und die Reaktionsmischung bei 80 bis 90°C bis zum vollständigen Formaldehydumsatz gerührt. Das so erhaltene Kunstharz wurde noch warm in Behälter abgefüllt.

Kunstharz 1:

| | |
|---|---|
| Vorlage | 1082,9 g Diglycidylether auf Basis BPA, EEW = 188 |
| | 132,2 g Polyoxybutylendiglycidylether, EEW = 415 |
| | 342,0 g BPA |
| | 130,9 g DDh |
| | 110,2 g NPh |
| | 94,6 g Propylenglykolphenylether |
| Katalysator | 1,1 g TPP |
| EEW | 750 |
| Zulauf I | 271,9 g Propylenglykolmonomethylether |
| Zulauf II | 337,4 g Leinölfettsäure |
| | 156,9 g DEAPA |
| Zulauf III | 72,3 g PFA |
| Festgehalt | 85,3 % |
| Aminzahl | 58 mg KOH/g |

Kunstharz 2:

| | |
|---|---|
| Vorlage | 1082,9 g Diglycidylether auf Basis BPA, EEW = 188 |

(fortgesetzt)

|  | 132,2 g Polyoxybutylendiglycidylether, EEW = 415<br>285,0 g BPA<br>261,9 g DDh<br>94,6 g Propylenglykolphenylether |
|---|---|
| Katalysator | 0,9 g TPP |
| EEW | 600 |
| Zulauf I | 218,2 g Propylenglykolmonomethylether |
| Zulauf II | 193,4 g DEAPA<br>415,8 g Leinölfettsäure |
| Zulauf III | 89,1 g PFA |
| Festgehalt<br>Aminzahl | 85,6 %<br>69 mg KOH/g |

Kunstharz 3:

| Vorlage | 842,3 g Diglycidylether auf Basis BPA, EEW = 188<br>396,5 g Polyoxybutylendiglycidylether, EEW = 415<br>342,0 g BPA<br>130,9 g DDh<br>110,2 g NPh<br>95,6 g Propylenglykolphenylether |
|---|---|
| Katalysator | 0,4 g TPP |
| EEW | 750 |
| Zulauf I | 104,8 g Propylenglykolmonomehtylether |
| Zulauf II | 162,1 g DEAPA<br>348,6 g Leinölfettsäure |
| Zulauf III | 74,7 g PFA |
| Festgehalt<br>Aminzahl | 90,6 %<br>59 mg KOH/g |

Kunstharz 4:

| Vorlage | 842,3 g Diglycidylether auf Basis BPA, EEW = 188<br>396,5 g Polyoxybutylendiglycidylether, EEW = 415<br>342,0 g BPA<br>261,9 g DDh<br>97,0 g Propylenglykolphenylether |
|---|---|

(fortgesetzt)

| | |
|---|---|
| Katalysator | 1,08 g TPP |
| EEW | 750 |
| Zulauf I | 107,4 g Propylenglykolmonomethylether |
| Zulauf II | 158,8 g DEAPA<br>341,6 g Leinölfettsäure |
| Zulauf III | 73,2 g PFA |
| Festgehalt<br>Aminzahl | 91,8 %<br>57 mg KOH/g |

Kunstharz 5:

| | |
|---|---|
| Vorlage | 842,3 g Diglycidylether auf Basis BPA, EEW = 188<br>396,5 g Polyoxybutylendiglycidylether, EEW = 415<br>285,0 g BPA<br>261,9 g DDh<br>94,0 g Propylenglykolphenylether |
| Katalysator | 0,9 g TPP |
| EEW | 600 |
| Zulauf I | 96,4 g Propylenglykolmonomethylether |
| Zulauf II | 183,6 g DEAPA<br>394,8 g Leinölfettsäure |
| Zulauf III | 84,6 g PFA |
| Festgehalt<br>Aminzahl | 92,1 %<br>66 mg KOH/g |

Kunstharz 6:

| | |
|---|---|
| Vorlage | 805,4 g Diglycidylether auf Basis BPA, EEW = 188<br>379,2 g Polyoxybutylendiglycidylether, EEW = 415<br>205,2 g BPA<br>117,8 g DDh<br>99,2 g NPh<br>42,6 g Propylenglykolphenylether |
| Katalysator | 0,5 g TPP |
| EEW | 475 |

(fortgesetzt)

| Zulauf I | 89,7 g Propylenglykolmonomethylether |
|---|---|
| Zulauf II | 222,6 g DEAPA<br>478,8 g Leinölfettsäure |
| Zulauf III | 102,6 g PFA |
| Festgehalt | 94,8 % |
| Aminzahl | 81 mg KOH/g |

II) Herstellung der erfindungsgemäßen Pigmentzubereitungen

Allgemeine Arbeitsvorschrift

Die Kunstharze wurden mit Milchsäure in den angegebenen Mengen vermischt und mit der Hälfte der angegebenen Menge VE-Wasser verdünnt. Anschließend wurden die angegebenen Mengen der Pigmente zugesetzt. Die Mischung wurde in einer Rührwerkskugelmühle bis zu einer Hegman-Feinheit < 7 vermahlen. Anschließend wurde mit der restlichen Menge VE-Wasser verdünnt.

| Zubereitung 1: | Kunstharz 1: | 113,5 g |
|---|---|---|
| | Titandioxid : | 344,0 g |
| | Bleisilikat : | 42,6 g |
| | Perlruß : | 6,5 g |
| | Milchsäure : | 7,2 g |
| | VE-Wasser : | 400,7 g |

| Zubereitung 2: | Kunstharz 2 : | 113,1 g |
|---|---|---|
| | Titandioxid : | 344,0 g |
| | Bleisilikat : | 42,6 g |
| | Perlruß : | 6,5 g |
| | Milchsäure : | 8,6 g |
| | VE-Wasser : | 405,6 g |

| Zubereitung 3: | Kunstharz 3 : | 106,8 g |
|---|---|---|
| | Titandioxid : | 344,0 g |
| | Bleisilikat : | 42,6 g |
| | Perlruß : | 6,5 g |
| | Milchsäure : | 7,3 g |
| | VE-Wasser : | 401,7 g |

| Zubereitung 4: | Kunstharz 4 : | 115,4 g |
|---|---|---|
| | Titandioxid : | 344,0 g |
| | Bleisilikat : | 42,6 g |
| | Perlruß : | 6,5 g |
| | Milchsäure : | 7,1 g |
| | VE-Wasser : | 400,7 g |

| Zubereitung 5: | Kunstharz 5 : | 105,1 g |
| --- | --- | --- |
| | Titandioxid : | 344,0 g |
| | Bleisilikat : | 42,6 g |
| | Perlruß : | 6,5 g |
| | Milchsäure : | 8,2 g |
| | VE-Wasser : | 399,4 g |

| Zubereitung 6: | Kunstharz 6 : | 102,1 g |
| --- | --- | --- |
| | Titandioxid : | 344,0 g |
| | Bleisilikat : | 42,6 g |
| | Perlruß : | 6,5 g |
| | Milchsäure : | 10,1 g |
| | VE-Wasser : | 395,1 g |

| Zubereitung 7: | Kunstharz 6 : | 101,1 g |
| --- | --- | --- |
| | Titandioxid : | 272,0 g |
| | Aluminiumsilikat : | 79,2 g |
| | Kreide : | 35,4 g |
| | Perlruß : | 6,5 g |
| | Milchsäure : | 10,1 g |
| | VE-Wasser : | 395,1 g |

III) Herstellung einer Bindemittel-Vernetzer-Dispersion

a) Herstellung des Amidamin-Vorproduktes

246 g Hexamethylendiamin, 307 g Dimerfettsäure, 59 g Leinölfettsäure und 39 g Xylol wurden auf 190°C erhitzt und 57 g Reaktionswasser-Xylol-Gemisch azeotrop abdestilliert. Man verdünnte mit 66 g Xylol. Anschließend wurden nochmals 4,1 g Hexamethylendiamin zugesetzt. Die Aminzahl des Produkts betrug 249 mg KOH/g und die Säurezahl 1,6 ml KOH/g.

b) Herstellung des Bindemittels

248 g eines tetrafunktionellen Glycidylethers auf der Basis von Bisphenol A mit einem Epoxidequivalentgewicht von ca. 180 bis 190, 220 g Nonylphenol und 25 g Phenoxypropanol wurden auf 130°C unter Rühren erwärmt. Man gab 0,12 g Triphenylphosphin hinzu und ließ so lange reagieren, bis das Epoxidequivalentgewicht 477 betrug. Man verdünnte mit 176 g eines Lösemittelgemisches aus Isobutanol und Butylglykol (Gewichtsverhältnis 9:1) und kühlte auf 60°C ab. Man tropfte 30 g Methylethanolamin hinzu und ließ noch weitere 10 Minuten reagieren. Dann wurden 141,3 g des Amidaminvorproduktes und 53 g Isobutanol-Butylglykol-Gemisch (9:1) hinzugegeben. Man hielt die Temperatur noch 2 Stunden auf 80°C. Feststoffgehalt: 68,2 Gew.-%; Aminzahl: 180,5 g KOH/g.

c) Herstellung des Vernetzers

504 g trimerisiertes Hexamethylendiisocyanat wurden in 382 g Toluol gelöst. Bei 70°C tropfte man unter Kühlen 388 g Dibutylamin hinzu. Man rührte bis der Isocyanatwert nahe Null war.

d) Herstellung der Bindemittel-Vernetzer-Dispersion

872 g des Bindemittels wurden mit 364 g des Vernetzers und 28,7 g Essigsäure innig vermischt. Zu dem Gemisch wurden unter Rühren langsam 1193 g Wasser hinzugetropft.

IV) Vergleichspigmentzubereitungen

a) Herstellung eines Vergleichsreibharzes

640 Teile eines Diglycidylethers auf Basis von Bisphenol A und Epichlorhydrin mit einem Epoxidequivalentgewicht von 485 und 160 Teile eines solchen mit einem Epoxidequivalentgewicht von 189 wurden bei 100°C gemischt. In einem weiteren Gefäß wurden 452 Teile Hexamethylendiamin vorgelegt, auf 100°C erhitzt und 720 Teile der obigen heißen Epoxidharzmischung innerhalb einer Stunde zugegeben, wobei leicht gekühlt werden mußte, um die Temperatur bei 100°C zu halten. Nach weiteren 30 Minuten wurde unter Temperaturerhöhung und vermindertem Druck das überschüssige Hexamethylendiamin abgezogen, wobei zum Schluß eine Temperatur von 205°C und ein Druck von 30 mbar erreicht wird. Anschließend wurden 57,6 Teile Stearinsäure, 172,7 Teile Dimerfettsäure und 115 Teile Xylol zugesetzt. Dann wird innerhalb von 90 Minuten bei 175 bis 180°C das gebildete Wasser azeotrop abdestilliert. Anschließend wurden 58 Teile Butylglykol und 322 Teile Isobutanol zugefügt. Das Produkt hatte einen Feststoffgehalt von 70 % und eine Viskosität von 2240 mPas, gemessen bei 75°C und einem Platten-Kegel-Viskosimeter.

b) Herstellung der Vergleichspigmentzubereitung (V1)

Zu 525,8 g des Reibharzes wurden 168,7 g Butylglykol, 600 g Wasser und 17,7 g Essigsäure gegeben. Dann setzte man 800 g Titandioxid, 11,0 g Ruß und 50 g basisches Bleisilikat hinzu und mahlte auf einer Kugelmühle bis zu einer Korngröße kleiner 9 µm. Man stellte den Feststoffgehalt mit Wasser auf 48 Gew.-% ein.

c) Herstellung der Vergleichspigmentzubereitung (V2)

Die Vergleichspigmentzubereitung (V2) wurde unter Verwendung des Vergleichsreibharzes entsprechend der allgemeinen Arbeitsvorschrift für die Herstellung der erfindungsgemäßen Zubereitungen 1 bis 7 hergestellt. Zum Erreichen einer Schichtdicke von 22 µm mußten noch 12 ml Propylenglykol pro Liter Elektrotauchlackierbad zugegeben werden. Vergleichspigmentzubereitung (V2):

| | |
|---|---|
| Vergleichsreibharz: | 138,3 g (= 96,4 g Festgehalt) |
| Titandioxid: | 344,0 g |
| Bleisilikat: | 42,6 g |
| Perlruß: | 6,5 g |
| Milchsäure: | 11,2 g |
| VE-Wasser: | 371,9 g |

V) Herstellung der Elektrotauchlackierbäder

Zu 1980 g der Bindemittel-Vernetzer-Dispersion wurden 676 g einer der oben genannten Pigmentzubereitungen zugegeben. Die Mischungen wurden innig vermischt und mit VE-Wasser auf 5000 g Gesamtgewicht aufgefüllt. Der Feststoffgehalt der Bäder lag bei etwa 20 %. Die Beschichtung von Blechen für die anwendungstechnischen Prüfungen wurden vorgenommen, nachdem die Bäder 7 Tage bei 30°C gerührt worden waren.

VI) Anwendungstechnische Prüfungen

Bei einer Spannung von 220 bis 350 V und einer Temperatur von 27°C wurden aus den Elektrotauchlackierbädern an zinkphosphatierten Stahlblechen der Größe 190 x 105 mm innerhalb von 2 Minuten Überzüge abgeschieden. Diese wurden bei einer Temperatur von 165°C ausgehärtet. Die Schichtdicke der erhaltenen Überzüge betrug zwischen 22 und 25 µm. Anschließend wurden die beschichteten Bleche den anwendungstechnischen Prüfungen unterzogen. Die Ergebnisse sind der Tabelle zu entnehmen.

Tabelle

| Elektrotauchlackier-Disp. Nr. | Pigmentzuber. Nr. | U [V] | ET [mm] | RI [Nm] | DBE(-) [mm²/R] | KWT | Lösungsmittelgehalt [%] |
|---|---|---|---|---|---|---|---|
| | | | | | | UR [mm] / F / K | |
| 1 | 1 | 280 | 6,9 | 9,1 | 6,1/3 | 1,6/ 1 / 3 | 0,35 |
| 2 | 2 | 320 | 7,0 | 11,3 | 5,8/3 | 1,5/ 1 / 3 | 0,35 |
| 3 | 3 | 300 | 8,2 | 15,8 | 5,1/2 | 1,4/ 0 / 2 | 0,27 |
| 4 | 4 | 290 | 8,3 | 18,1 | 5,0/2 | 1,5/ 0 / 2 | 0,23 |
| 5 | 5 | 330 | 8,1 | 18,1 | 4,2/1 | 1,3/ 0 / 1 | 0,24 |
| 6 | 6 | 350 | 8,8 | >18,8 | 3,1/1 | 1,3/ 0 / 1 | 0,22 |
| 7 | 7 | 240 | 8,6 | >18,6 | 4,0/1 | 2,5/ 0 / 3 | 0,22 |
| Vergleich | V1 | 220 | 4,9 | <1,1 | 13,7/5 | 2,2/ 2 / 5 | 1,85 |
| Vergleich | V2 | 240 | 5,1 | <1,1 | 12,1/5 | 2,0/ 2 / 5 | 1,64 |

U:       Abscheidespannung, gemessen in [V]

ET:      Erichsentiefung, gemessen in [mm]

RI:      Reverse impact, Schlagtiefung; Bestimmung mit einem mandrel impact tester der Fa. Gardner nach ASTM D 2794

DBE:     Daimler-Benz-Einzelsteinschlagtest bei einer Prüftemperatur von -20°C,DIN 55 995, Verfahren A; Fa. Erichsen Technische Beschreibung Modell 490 (1981)

R:       Rostgrad 0 (kein Rost) - 5 (stark verrostet)

KWT:     10 Zyklen Klimawechseltest nach VDA 621-415

UR:      Unterwanderung am Ritz, gemessen in [mm]

F:       Flächenrostgrad 0 (kein Rost) - 5 (stark verrostet)

K:       Kantenrostgrad 0 (kein Rost) - 5 (stark verrostet)


Der Lösungsmittelgehalt bezieht sich auf das frische Bad und ist in Gew.-%, bezogen auf das Gesamtgewicht des Bades, angegeben.


**Patentansprüche**

1.   Kunstharz auf der Basis von Produkten, die durch Umsetzung von

     A) 30 bis 80 Gew.-% epoxidgruppen-tragenden Harzen auf der Basis

          $a_1$) mehrwertiger Phenole und
          $a_2$) mindestens einer Verbindung aus der Gruppe der

               $\alpha_1$) Polyoxyalkylenpolyole,
               $\alpha_2$) Polyoxyalkylenpolyepoxide,
               $\alpha_3$) Polyoxyalkylenpolyamine,
               $\alpha_4$) mehrwertigen aliphatischen Alkohole und gewünschtenfalls

          $a_3$) gegenüber Epoxiden monofunktionell reagierenden phenolischen Verbindungen und

     B) 10 bis 30 Gew.-% Monocarbonsäuren mit 5 bis 30 Kohlenstoffatomen und

     C) 5 bis 20 Gew.-% Aminen, welche mindestens eine primäre und eine tertiäre Aminogruppe enthalten und

     D) 1 bis 10 Gew.-% formaldehyd-liefernden Verbindungen und

     E) 0 bis 5 Gew.-% an Zusatzstoffen

     wobei sich die Komponenten (A) bis (E) zu 100 Gew.% ergänzen, erhältlich sind.

2.   Kunstharze nach Anspruch 1, in denen die Komponente (A) epoxidgruppen-tragende Harze auf der Basis von Bisphenol A, einem Polyoxalkylenpolyepoxid und einem Phenol, das mindestens einen Kernsubstituenten aus der Gruppe $C_1$-$C_{20}$-Alkyl-, $C_1$-$C_{20}$-Alkoxy- und $C_1$-$C_{20}$-Polyetherrest trägt, ist.

3.   Kunstharze nach den Ansprüchen 1 oder 2, in denen die Komponente (C) Dimethylaminopropylamin ist.

4.   Verfahren zur Herstellung von Kunstharzen gemäß einem der Ansprüche 1 bis 3, dadurch gekennzeichnet, daß man das Umsetzungsprodukt aus

     A) 30-80 Gew.-% eines epoxidgruppen-tragenden Harzes auf der Basis

          $a_1$) mehrwertiger Phenole und
          $a_2$) mindestens einer Verbindung aus der Gruppe der

               $\alpha_1$) Polyoxyalkylenpolyole,
               $\alpha_2$) Polyoxyalkylenpolyepoxide,

$\alpha_3$) Polyoxyalkylenpolyamine,
$\alpha_4$) mehrwertigen aliphatischen Alkohole und gewünschtenfalls

a$_3$) gegenüber Epoxiden monofunktionell reagierenden phenolischen Verbindungen und

B) 10-30 Gew.-% einer Monocarbonsäure mit 5 bis 30 Kohlenstoffatomen und

C) 5-20 Gew.-% eines Amins, welches mindestens eine primäre und eine tertiäre Aminogruppe enthält mit

D) 1-10 Gew.-% einer formaldehyd-liefernden Verbindung,
gewünschtenfalls in Gegenwart von E) 0-5 Gew.-% Zusatzstoffen, wobei sich die Komponenten (A) bis (E) zu 100 Gew.-% ergänzen bei einer Temperatur von 50 bis 150°C umsetzt.

5. Wäßrige Dispersionen enthaltend von 10 bis 50 Gew.-% eines Kunstharzes gemäß den Ansprüchen 1 bis 4.

6. Verfahren zur Herstellung der wäßrigen Dispersionen gemäß Anspruch 5, dadurch gekennzeichnet, daß man das Kunstharz vor dem Dispergieren protoniert.

7. Pigmentzubereitungen, enthaltend als wesentliche Komponenten

a) eine wäßrige Dispersion nach Anspruch 5 und
b) ein Pigmentpulver und gewünschtenfalls
c) Hilfsstoffe.

8. Verfahren zur Herstellung der Pigmentzubereitungen gemäß Anspruch 7, dadurch gekennzeichnet, daß man

a) 10 bis 70 Gew.-% einer wäßrigen Dispersion nach Anspruch 5 und

b) 30 bis 60 Gew.-% eines Pigmentpulvers und

c) 0 bis 10 Gew.-% an Hilfsstoffen

verwendet, wobei sich die Komponenten (a) bis (c) zu 100 Gew.% ergänzen.

9. Verwendung der Pigmentzubereitungen gemäß Anspruch 7 in Elektrotauchlackierbädern.

**Claims**

1. A synthetic resin based on products which are obtainable by reacting

A) from 30 to 80% by weight of epoxy-carrying resins based on

a$_1$) polyhydric phenols and
a$_2$) at least one compound selected from the group consisting of the

$\alpha_1$) polyoxyalkylenepolyols,
$\alpha_2$) polyoxyalkylenepolyepoxides,
$\alpha_3$) polyoxyalkylenepolyamines and
$\alpha_4$) polyhydric aliphatic alcohols and, if desired,

a$_3$) phenolic compounds which react monofunctionally toward epoxides,

B) from 10 to 30% by weight of monocarboxylic acids of 5 to 30 carbon atoms,
C) from 5 to 20% by weight of amines which contain at least one primary and one tertiary amino group,
D) from 1 to 10% by weight of formaldehyde-donating compounds and
E) from 0 to 5% by weight of additives,

the components (A) to (E) summing to 100% by weight.

2. A synthetic resin as claimed in claim 1 wherein the component (A) is an epoxy-carrying resin based on bisphenol A, a polyoxyalkylenepolyepoxide and a phenol which carries at least one substituent in the nucleus, selected from the group consisting of $C_1$-$C_{20}$-alkyl, $C_1$-$C_{20}$-alkoxy and $C_1$-$C_{20}$-polyether radicals.

3. A synthetic resin as claimed in claim 1 or 2, wherein the component (C) is dimethylaminopropylamine.

4. A process for the preparation of a synthetic resin as claimed in any of claims 1 to 3, wherein the reaction product of

   A) from 30 to 80% by weight of an epoxy-carrying resin based on

   $a_1$) polyhydric phenols and
   $a_2$) at least one compound selected from the group consisting of the

   $\alpha_1$) polyoxyalkylenepolyols,
   $\alpha_2$) polyoxyalkylenepolyepoxides,
   $\alpha_3$) polyoxyalkylenepolyamines and
   $\alpha_4$) polyhydric aliphatic alcohols and, if desired,

   $a_3$) phenolic compounds which react monofunctionally toward epoxides,

   B) 10 - 30% by weight of a monocarboxylic acid of 5 to 30 carbon atoms and
   C) 5 - 20% by weight of an amine which contains at least one primary and one tertiary amino group is reacted at from 50 to 150°C with
   D) 1 - 10% by weight of a formaldehyde-donating compound,

   if desired in the presence of E) 0 - 5% by weight of additives, the components (A) to (E) summing to 100% by weight.

5. An aqueous dispersion containing from 10 to 50% by weight of a synthetic resin as claimed in any of claims 1 to 4.

6. A process for the preparation of an aqueous dispersion as claimed in claim 5, wherein the synthetic resin is protonated prior to dispersing.

7. A pigment formulation containing, as essential components,

   a) an aqueous dispersion as claimed in claim 5,
   b) a pigment powder and,
   if desired,
   c) assistants.

8. A process for the preparation of a pigment formulation as claimed in claim 7, wherein

   a) from 10 to 70% by weight of an aqueous dispersion as claimed in claim 5,
   b) from 30 to 60% by weight of a pigment powder and
   c) from 0 to 10% by weight of assistants

   are used, the components (a) to (c) summing to 100% by weight.

9. Use of a pigment formulation as claimed in claim 7 in an electrocoating bath.

**Revendications**

1. Résine synthétique à base de produits, que l'on peut obtenir par réaction

   A) de 30 à 80 % en poids de résines portant des groupements époxydes à base

$a_1$) de phénols polyvalents et

$a_2$) d'au moins un composé du groupe

$\alpha_1$) des polyoxyalkylènepolyols,

$\alpha_2$) des polyoxyalkylènepolyépoxydes,

$\alpha_3$) des polyoxyalkylènepolyamines,

$\alpha_4$) des alcools aliphatiques polyvalents et si on le désire

$a_3$)de composés phénoliques réagissant de façon monofonctionnelle vis-à-vis des époxydes et

B) de 10 à 30 % en poids d'acides monocarboxyliques ayant de 5 à 30 atomes de carbone et

C) de 5 à 20 % en poids d'amines, qui contiennent au moins un groupement amino primaire et un groupement amino tertiaire et

D) de 1 à 10 % en poids de composés fournissant du formaldéhyde et

E) de 0 à 5 % en poids de substances additives,

les composants (A) à (E) se complétant à 100 % en poids.

2. Résines synthétiques selon la revendication 1, dans lesquelles le composant (A) est constitué de résines portant des groupements époxydes à base de bisphénol A, d'un polyoxyalkylènepolyépoxyde et d'un phénol, qui porte au moins un substituant nucléaire du groupe des résidus alkyle en $C_1$-$C_{20}$, alkoxy en $C_1$-$C_{20}$, et polyéther en $C_1$-$C_{20}$.

3. Résines synthétiques selon les revendications 1 ou 2, dans lesquelles le composant (C) est la diméthylaminopropylamine.

4. Procédé de production de résines synthétiques selon l'une quelconque des revendications 1 à 3, caractérisé en ce que l'on fait réagir à une température de 50 à 150°C le produit de réaction

A) de 30 à 80 % en poids dune résine portant des groupements époxydes à base

$a_1$) de phénols polyvalents et

$a_2$) d' au moins un composé du groupe

$\alpha_1$) des polyoxyalkylènepolyols,

$\alpha_2$) des polyoxyalkylènepolyépoxydes,

$\alpha_3$) des polyoxyalkylènepolyamines,

$\alpha_4$) des alcools aliphatiques polyvalents et si on le désire

$a_3$)de composés phénoliques réagissant de façon monofonctionnelle vis-à-vis des époxydes et

B) de 10 à 30 % en poids d'un acide monocarboxylique ayant de 5 à 30 atomes de carbone et

C) de 5 à 20 % en poids d'une amine, qui contient au moins un groupement amino primaire et un groupement amino tertiaire avec

D) de 1 à 10 % en poids d'un composé fournissant du formaldéhyde
si on le désire en présence

E) de 0 à 5 % en poids de substances additives,

les composants (A) à (E) se complétant à 100 % en poids.

5. Dispersions aqueuses contenant de 10 à 50 % en poids d'une résine synthétique selon les revendications 1 à 4.

6. Procédé de production des dispersions aqueuses selon la revendication 5, caractérisé en ce que l'on procède à la protonation de la résine synthétique avant la mise en dispersion.

7. Préparations de pigments, contenant en tant que composants essentiels

    a) une dispersion aqueuse selon la revendication 5 et
    b) une poudre de pigment et
    si on le désire
    c) des additifs.

8. Procédé de production des préparations de pigment selon la revendication 7, caractérisé en ce que l'on utilise

    a) de 10 à 70 % en poids d'une dispersion aqueuse selon la revendication 5 et
    b) de 30 à 60 % en poids d'une poudre de pigments et
    c) de 0 à 10 % en poids d'additifs,

les composants (a) à (c) se complétant à 100 % en poids.

9. Utilisation des préparations de pigment selon la revendication 7 dans des bains de trempage électrophorétique.